# EUROPEAN PATENT APPLICATION

(11) **EP 0 521 385 A1**
(43) Date of publication of application: **07.01.1993**
(21) Application number: 92110667.0
(22) Date of filing: 25.06.1992
(51) Int. Cl.: F16F 15/03, C23C 2/24

(54) **Method for damping vibration of a continuously moved steel strip**

(30) Priority: 25.06.1991 JP 180417/91; 25.06.1991 JP 180419/91
(71) Applicant: NKK CORPORATION, Tokyo 100 (JP)
(72) Inventor: Sato, Toshio, c/o Pat.and License Dep., Kawasaki-ku, Kawasaki 210 (JP); Ishii, Toshio, c/o Pat.and License Dep., Kawasaki-ku, Kawasaki 210 (JP); Sugiyama, Shunichi, c/o Pat.and License Dep., Kawasaki-ku, Kawasaki 210 (JP); Yada, Akira, c/o Pat.and License Dep., Kawasaki-ku, Kawasaki 210 (JP)
(74) Representative: Füchsle, Klaus, Dipl.-Ing.

(57) **Abstract**

A method for damping the vibration of a continuously moving steel strip comprises the steps of positioning at least one pair of high-frequency current conducting paths ( 1a, 1b ) near one side of a steel strip (S) moved continuously and near another side thereof, each of said high-frequency current conducting paths being parallel with a surface of the steel strip, and flowing a high-frequency current strong enough to magnetically saturate the steel strip through at least one pair of high-frequency current conducting paths to induce a high-frequency current of an opposite phase in the steel strip, a magnetic pressure acting on surfaces of the steel strip being generated by interaction of this induced high-frequency current with the high-frequency current of the high-frequency current conducting paths.

## Description

The present invention relates to a method for continuously moving a steel strip, and more particularly to a method for continuously moving a steel strip in a continuous annealing line, an electric galvanizing line and a hot-dipping plating line.

A steel strip is cooled, being moved by rolls in a gas jet cooling zone of a continuous annealing line. There occurs vibration of the steel strip due to fluttering of the steel strip generated by a high-speed gas jetted on the steel strip. When such vibration of the steel strip is generated, the steel strip contacts nozzles for jetting a cooling gas, which causes scratches on a surface of the steel strip. To prevent the generation of the scratches on the surface of the steel strip, it is necessary to greatly space out said nozzles and the steel strip. When a distance between the nozzles and the steel strip is increased, a cooling effect of the steel strip is decreased. A thermal buckling of the steel strip is generated by an unequal cooling of the steel strip.

Unequal coating weight on a steel strip is generated due to bowing and vibration of the steel strip in an electric galvanizing line and a hot-dipping plating line other than the continuous annealing line. Various problems are raised in connection with vibration and bowing of a steel strip on a continuously moving line of the steel strip.

It is disclosed, for example, in Japanese Patent Application Laid Open No. 111839/77 that bowing of a steel strip is straightened by arranging magnetic rolls in a coating bath and causing the steel strip to be flat by attracting the steel strip to the rolls. Japanese Patent Application Laid Open No. 5853/82 discloses a method for preventing a steel strip from vibrating by placing magnets near both sides of the steel strip in a width direction of the steel strip. The above-described two methods cannot attain the object of simultaneously straightening a bowing of a steel strip and damping vibraiton of the steel strip.

Japanese Examined Patent Publication No. 16375/90 discloses a method for damping vibration of a steel strip by pressing the steel strip down by rolls before and behind gas jet cooling nozzles. In this method, the vibration of the steel strip cannot be perfectly damped, and surface scratches of the steel strip are generated by contact of the steel strip with presser rolls.

Japanese Examined Patent Publication No. 7444/69 discloses a method for applying a high-frequency magnetic field to a hot-dipping steel strip for the purpose of removing molten metal on the hot-dipping steel strip. In this method, a steel strip drawn out of a coating bath passes between coils, through which an electric current flows, and the steel strip passing between the coils is placed by a magnetic repulsive force of the steel strip at the center between the coils. However, since a magnetic attracting force strongly acts on the steel strip as a ferromagnetic body in the case where a high-frequency magnetic field is simply applied to the steel strip, the steel strip passing between the coils is attracted toward the coils, which gives rise to an unstable state of the steel strip. Therefore, it cannot be expected at all to damp vibration of the steel strip.

It is an object of the present invention to prevent a steel strip moved continuously from bowing and to damp vibration of the steel strip.

To attain the above-described object, the present invention provides a method for continuously moving a steel strip, comprising the steps of:
positioning at least one pair of high-frequency current conducting paths near one side of a steel strip moved continuously and near another side thereof, each of said high-frequency current conducting paths being parallel with a surface of the steel strip; and
flowing a high-frequency current strong enough to magnetically saturate the steel strip through said at least one pair of high-frequency current conducting paths to induce a high-frequency current of an opposite phase in the steel strip, a magnetic pressure acting on surfaces of the steel strip being generated by interaction of this induced high-frequency current with the high-frequency current of the high-frequency current conducting paths.
Figure 1 is a graphical representation showing the relationship between a magnetic field intensity (H) and a magnetic flux density (B) of a steel strip;
Figure 2 is a side elevation showing an example of an apparatus for executing the method of the present invention;
Figure 3 is a front elevation of the apparatus as shown in Figure 2;
Figures 4(A) and 4 (B) are side elevations showing another example of an apparatus for executing the method of the present invention;
Figure 5(A) is a front elevation of the apparatus as shown in Figure 4(A);
Figure 5(B) is a front elevation of the apparatus as shown in Figure 4(B);
Figures 6(A) and 6(B) are side elevations showing another example of an apparatus for executing the method of the present invention;
Figure 7 is a side elevation showing another example of an apparatus for executing the method of the present invention;
Figure 8 is a front elevation showing another example of an apparatus for executing the method of the present invention;
Figure 9 is a front elevation showing another example of an apparatus for executing the method of the present invention;
Figure 10 is a side elevation of the apparatus as shown in Figure 9;
Figure 11 is a schematic illustration showing an example of a case that parts of a high-frequency current conducting path facing a steel strip near the edges of the steel strip are inclined in a width direction of the steel strip;
Figure 12 is a graphical representation showing an analytic model;
Figure 13 is a graphical representation showing an analytic example of one cycle of the maximum magnetic pressure in the analytic model as shown in Figure 12;
Figures 14(A), (B) and (C) are graphical representations showing distributions of magnetic pressures;
Figure 15 is a side elevation showing an example of an apparatus for executing the method of the present invention;
Figure 16 is a front elevation of the apparatus as shown in Figure 15;
Figure 17 is a side elevation showing an example of an apparatus for executing the method of the present invetion;
Figure 18 is a front elevation of the apparatus as shown in Figure 17;
Figure 19 is a side elevation showing an example of an apparatus for executing the method of the present invention;
Figure 20 is a front elevation of the apparatus as shown in Figure 19;
Figure 21 is a side elevation showing an example of an apparatus for executing the method of the present invention;
Figure 22 is a front elevation of the apparatus as shown in Figure 21;
Figure 23 is a graphical representation showing an analytic model; and
Figure 24 is a schematic illustration showing a distribution of magnetic fields obtained by an analysis.

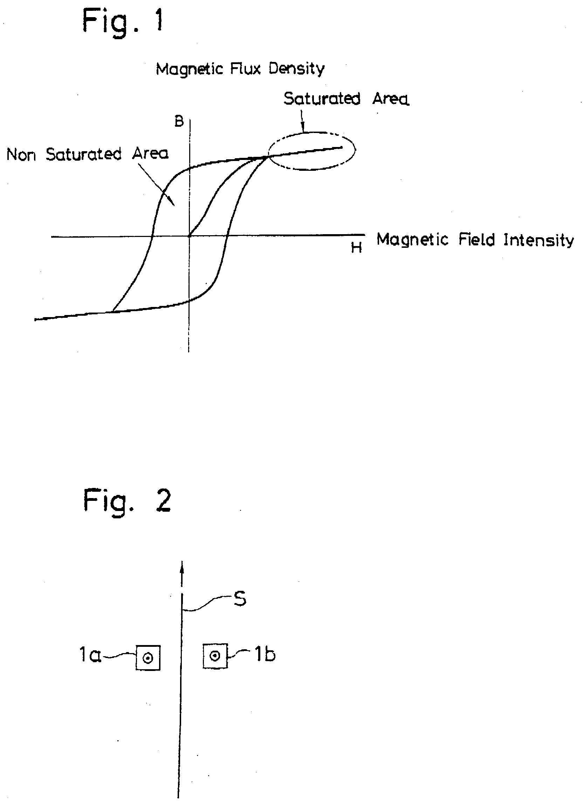

Although a magnetic field is simply applied to a ferromagnetic body such as a steel strip to damp a vibration of the steel strip and to control coating weight on the steel strip, a magnetic attracting force acts on the steel strip, which produces an unstable state of the steel strip. The present inventors paid attention to the fact that, as shown by a B-H curve indicating the relationship between the magnetic field intensity (H) and the magnetic flux density (B) in Figure 1, an area showing a ferromagnetism of the steel strip is confined to a non-saturation area, but the steel strip has no ferromagnetism in a saturation area. When a high-frequency current strong enough to reach the saturation area is applied to the steel strip, a magnetic repulsive force of the steel strip becomes stronger than a magnetic attracting force of the steel strip. The repulsive force is generated between an electric current flowing through a high-frequency current conducting path and an induced current in the steel strip. Thus, an unstable state produced by the magnetic attracting force is removed. The high-frequency current is desired to have 500 to 10000 Hz. When the high-frequency current has a frequency of less than 500 Hz, there is no effect. When the high-frequency current has a frequency of more than 10000 Hz, a consumption of electricity becomes extremely great.

In the present invention, high-frequency current conducting paths each parallel with each side of a steel strip are arranged near the steel strip on one side of the steel strip moved continuously and on another side thereof. A high-frequency current strong enogh to magnetically saturate the steel strip is flowed through the high-frequency current conducting paths to induce a high-frequency current of opposite phase in the steel strip. A magnetic pressure acting on surfaces of the steel strip through an interaction of this induced high-frequency current with the high-frequency current of the high-frequency current conducting paths is generated. Bowing and vibration of the steel strip in a width direction of thereof are prevented by the magnetic pressure acting on the steel strip from both sides of the steel strip.

In the present invention, two pairs of high-frequency current conducting paths or more can be arranged at regular intervals in the direction of movement of a steel strip. The high-frequency current conducting paths near one side of the steel strip and near another side of the steel strip are positioned, substantially facing each other, the steel strip being positioned between the high-frequency current conducting paths. A high-frequency current of the same phase is flowed through the facing high-frequency current conducting paths. In the case where a plurality of high-frequency current conducting paths are arranged near one side of the steel strip and near another side the steel strip respectively, the high-frequency current conducting paths can be positioned, facing each other or without facing each other, the steel strip being positioned between the high-frequency current conducting paths. When the high-frequency current conducting paths face each other, the high-frequency current conducting paths are positioned, being shifted in the direction of movement of the steel strip. When the high-frequency current conducting paths are positioned, being shifted in the direction of movement of the steel strip, there is no limitation of phases of current as in the case where the high-frequency current conducting paths are positioned, facing each other, the steel strip being positioned between the high-frequency current conducting paths.

Each of the high-frequency current conducting paths is arranged across the steel strip in a width direction thereof. It is unnecessary, however, to arrange the steel strip in parallel with a width direction of the steel strip. The entire length of each of the high-frequency current conducting paths can be inclined relative to a width direction of the steel strip. Since the electric current flows near the edges of the steel strip at an angle of 90 ° to the direction of flow of electric current through the high-frequency current conducting path, the magnetic pressure adjacent to the edges of the steel strip inclines to weakening. To prevent the magnetic pressure from weakening near the edges of the steel strip, the entire length of each of the high-frequency current conducting paths can be inclined relative to the width direction of the steel strip or can be inclined near the edges of the steel strip.

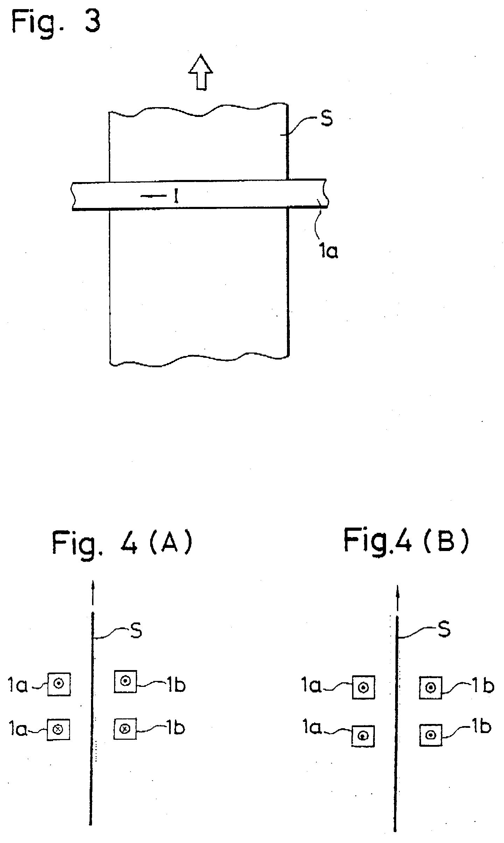

Figure 2 is a side elevation showing an example of an apparatus for executing the method of the present invention. Figure 3 is a front elevation showing the apparatus as shown in Figure 2. Symbol I in the drawing denotes a current.

High-frequency current conducting paths 1a, 1b are arranged in parallel with one side of a steel strip S and another side of the steel strip S near the steel strip S. When a high-frequency current of the same phase is flowed through the high-frequency current conducting paths 1a, 1b, an electric current having a phase opposite to the phase of the high-frequency current flows through the steel strip S. Symbol ⓞ of the high-frequency current conducting path 1a and Symbol ⓞ of the high-frequency current conducting path 1b denote that the current of both the high-frequency current conducting paths have the same phase. Since the current flowing through the steel strip flows in a direction opposite to the direction of the current flowing through the high-frequency current conducting paths, a magnetic repulsive force, that is, a magnetic pressure acts on the surfaces of the steel strip. However, since a ferromagnetic body such as a steel strip has a high permeability, a magnetic attracting force of the steel strip exceeds a magnetic repulsive frce of the steel strip and the steel strip comes to be in an unstable state. When the electric current flowing through the high-frequency current conducting paths 1a, 1b is increased, an amplitude of a magnetic field in the steel strip as shown in Figure 1 is increased and a retention time, during which the steel strip is retained in a saturation area, becomes longer. As a result, when the amplitude of the magnetic field in the steel strip exceeds a predetermined amplitude of the magnetic field in the steel strip, the magnetic repulsive force of the steel strip much prevails over the magnetic attracting force of the steel strip. In the present invention, a high-frequency current strong enough to magnetically saturate the steel strip is flowed through the high-frequency current conducting paths 1a, 1b, whereby a necessary magnetic repulsive force can be obtained. The magnetic repulsive force of the steel strip acts on the steel strip as if non-contact springs acted on the steel strip from both sides of the steel strip. Vibration of the steel strip is damped and bowing of the steel strip is straightened by the magnetic repulsive force. Under the condition that the vibration of the steel strip is damped and the bowing of the steel strip is straightened by the magnetic repulsive force, an excess metal attaching to the steel strip is removed from the steel strip and molten metal attaches uniformly to the surfaces of the steel strip.

In the example as shown in Figures 2 and 3, a pair of high-frequency current conducting paths 1a, 1b are positioned near a steel strip S, facing the steel strip S, the steel strip being positioned between the high-frequency current conducting paths 1a, 1b. A high-frequency current of the same phase is flowed through the current conducting paths 1a, 1b.

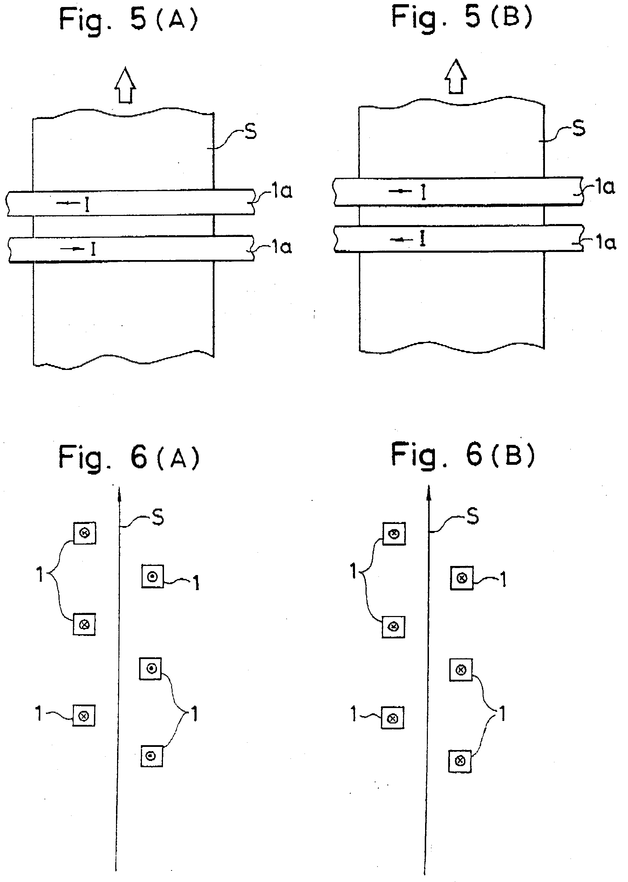

Figure 4 (A) is a side elevation showing another example of an apparatus for executing the method of the present invention. Figure 5 (A) is a front elevation showing the apparatus as shown in Figure 4 (A). Two pairs of high-frequency current conducting paths 1a, 1b, each facing the steel strip, a steel strip being positioned between the high-frequency current conducting pahts 1a, 1b, are arranged above and below respectively. In this example, the phase of the upper current conducting path is opposite to the phase of the lower current conducting path. In the example as shown in Figure 4 (B) and in Figure 5 (B), the phase of the upper current conducting path is equal to the phase of the lower current conducting path. The phases of the upper and lower current conducting paths can be opposite or equal to the other.

Figure 6 (A) is a side elevation showing another example of the apparatus for executing the method of the present invention.

High-frequency current conducting paths 1 near both sides of a steel strip are arrranged without facing each other, being shifted upwardly and downwardly, the steel strip being positioned between the high-frequency current conducting paths 1. The high-frequency current conducting paths 1 as a whole are arranged in zigzag. When a plurality of high-frequency current conducting paths are arranged near one side of the steel strip and near another side thereof, the high-frequency current conducting paths are arranged in such a way as shown in Figure 6 (A). Corresponding to a high-frequency current of each of the high-frequency current conducting paths, electric current of a phase opposite to the phase of the high-frequency current of the high-frequency current conducting paths flows. Opposite magnetic pressures act alternately on both sides of the steel strip S perpendicularly relative to the direction of movement of the steel strip. In the example of Figure 6 (A), the phases of the electric current flowing through the current conducting paths near both sides of the steel strip are opposite to each other. In the example of Figure 6 (B), the phases of the electric current passing through the high-frequency current conducting paths near both sides of the steel strip are equal to each other. That is, the phases of the electric current flowing through the current conducting paths are optional.

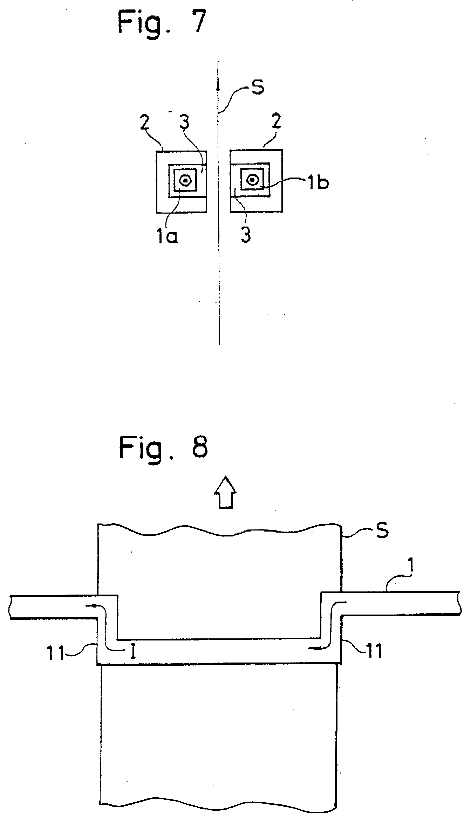

Figure 7 is a side elevation showing another example of the apparatus for executing the method of the present invention. High-frequency current conducting paths 1a, 1b excluding their sides facing the steel strip are enclosed by electomagnetic material 2 having a high permeability and a saturation magnetic flux density. The inside of the electromagnetic material 2 is a water-cooled box 3. Due to a small magnetic resistance of the electromagnetic material 2, a magnetic field strong enough to saturate the steel strip can be effectively applied to the steel strip even by means of a comparatively small electric current, whereby a high magnetic pressure can be generated.

Figure 8 is a front elevation showing another example of the apparatus for executing the method of the present invention.

To apply a particularly strong magnetic pressure to an edge of a steel strip, a bend 11 is formed at a portion of a high-frequency current conducting path 1 facing the edge of the steel strip along the direction of movement of the steel strip.

It is applicable to each of the examples as shown in Figures 1 to 7 to form the bend at a portion of a high-frequency current conducting path 1.

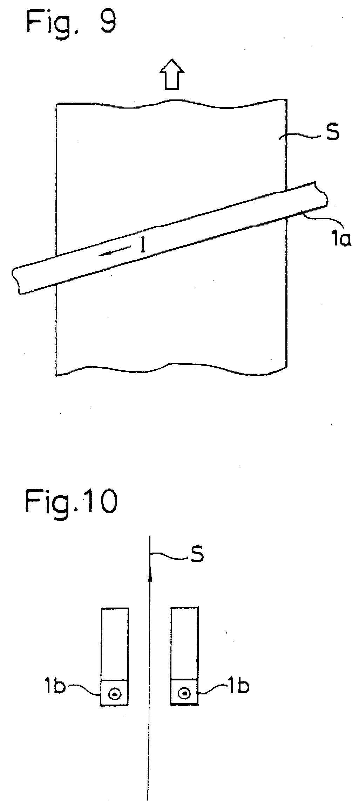

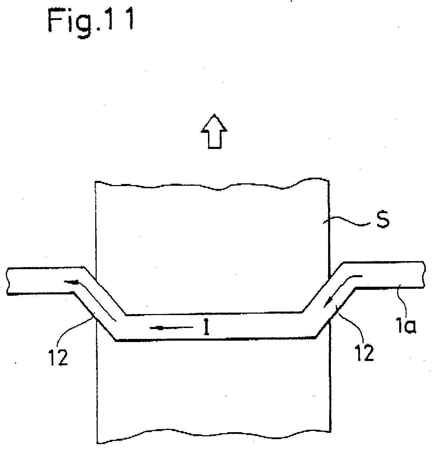

Since the direction of flow of electric current through the steel strip forms an angle of 90 ° relative to electric current flowing through the high-frequency current conducting path, a magnetic pressure inclines to weakening near the edges of the steel strip. To prevent the magnetic pressure from weakening near the edges of the steel strip, the high-frequency current conducting path can be inclined relative to the entire length of the high-frequency current conducting path in the width direction of the steel strip or can be inclined near the edge of the steel strip. Figure 9 is a front elevation showing another example of the apparatus for executing the method of the present invention. Figure 10 is a side elevation showing the apparatus as shwon in Figure 9. The entire length of the high-frequency current conducting paths 1a, 1b near both sides of the steel strip are inclined in the width direction of the steel strip. Figure 11 is an example showing the case where a portion of each of the high-frequency current conducting paths 1a, 1b is inclined in the width direction of the steel strip near the edges of the steel strip. It is applicable to each of the examples as shown in Figures 2 to 7 to incline the portions of the high-frequency current conducting paths near the edges of the steel strip.

The present inventors carried out a simulation analysis of the magnetic pressure to calculate the magnetic pressure, on which the high-frequency current flowed through the high-frequency current conducting paths had an effect. This analysis was carried out with an apparatus as shown in Figure 4 (A). A coil having a section of 30 mm in thickness and 50 mm in width was used. Electric current of 3 x 10⁴ A was flowed through the coil. A steel strip of 2.3 mm in thickness which had a relative permeability of 1 was used.

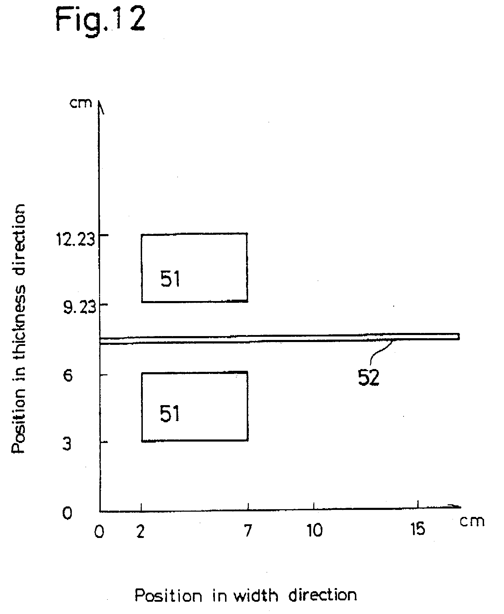

Figure 12 is a graphical representation showing an analytic model. A relative distance between a coil 51 and a steel strip 52 is shown in Figure 12.

The steel strip placed between high-frequency current conducting paths was positioned at the following levels:
(a) In the case where the steel strip was placed at the center between the high-frequency current conducting paths. The steel strip was positioned 15 mm away from each of the two high-frequency current conducting paths. The position of this steel strip corresponds to the position of the steel strip 52 in Figure 1.
(b) In the case where the steel strip was shifted by 5 mm from the above-mentioned center toward one high-frequency current conducting path.
(c) In the case where the steel strip was shifted by 10 mm from the above-mentioned center toward one high-frequency current conducting path.

As a result of the analysis, it was understood that half an amplitude of the magnetic field intensity under the above-mentioned condition was 160000 A/m and a steel strip having a representative B-H curve as shown in Figure 1 and Table 1 perfectly fell in the saturation area.

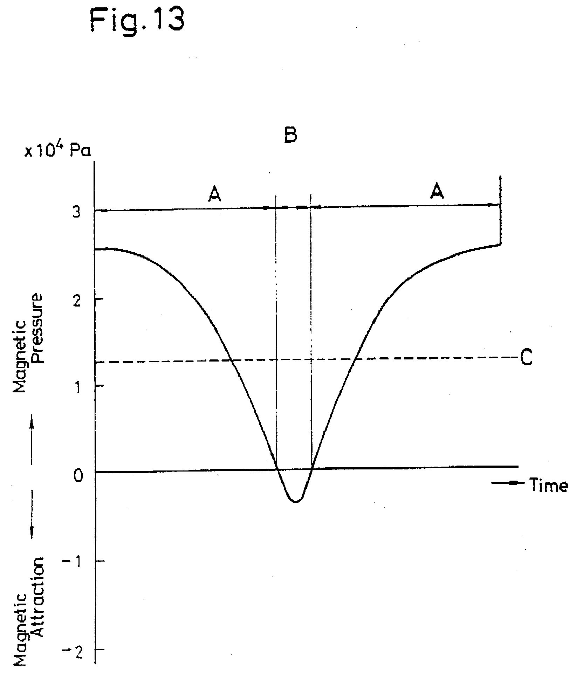

Figure 13 is a graphical representation showing an example wherein one cycle of the maximum magnetic pressure is analyzed in the analysis model as shown in Figure 12. Symbol A in the drawing indicates a state of the magnetic pressure in the saturation area. Symbol B indicates a state of the magnetic pressure in the non-saturation area. Symbol C is an avarage value of the magnetic pressures. A period of time, during which the magnetic attracting force exceeds the magnetic pressure, is 6% or less. The maximum value of the magnetic pressures is five times greater than the magnetic attracting force. Accordingly, notwithstanding that the steel strip is a ferromagnetic body, the magnetic pressure can be applied very stably to the steel strip.

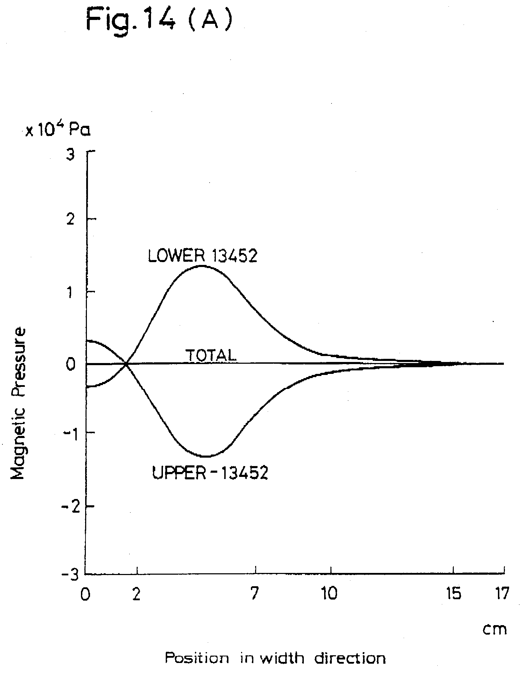

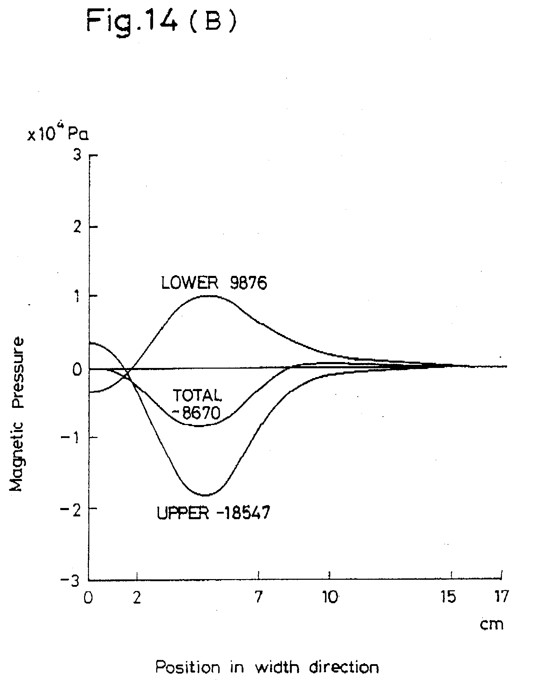

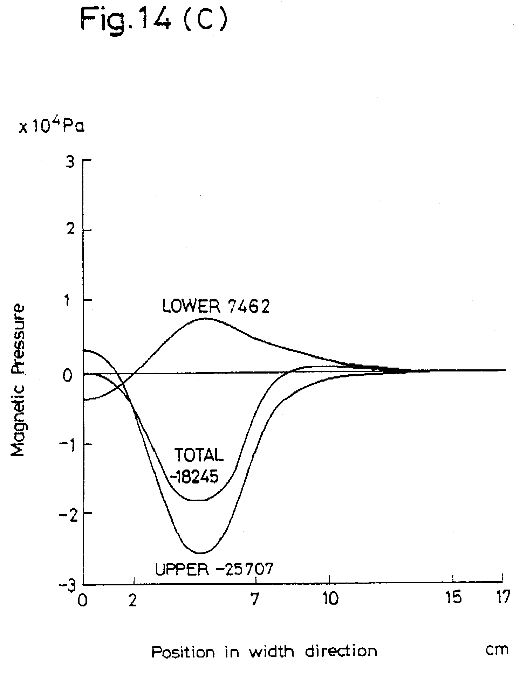

An example wherein a distribution of magnetic pressures obtained by averaging the magnetic pressures on the steel strip by time will now be shown. Figure 14 (A) is a graphical representation showing a distribution of magnetic pressures in the case where the steel strip is centered between two high-frequency current conducting paths. Figures 14 (B) and 14 (C) are graphical representations showing a distribution of magnetic pressures in the case where the steel strip is shifted by 5 mm and 10 mm respectively from the center between the two high-frequency current conducting paths toward the high-frequency current conducting path on one side. From the distribution of the magnetic pressures in Figures 14 (B) and 14 (C), it is understood that a force pushing the steel strip toward the center works as a whole in the case where the steel strip is shifted from the center. This magnetic pressure is increased as the steel strip approaches the high-frequency current conducting path. In consequence, the magnetic pressure effectively acts on a centering work of the steel strip, which is effective in damping of vibration of the steel strip. The magnetic pressure is effective in straightening of bowing of the steel strip. Owing to the magnetic pressure, a total amount of bowing of the steel strip can be limited to 0.5 mm or less.

An apparatus as shown in Figure 2 was arranged at intervals of about 2 m in three electric galvanizing lines and tested on the basis of those results. The size and the condition of electric current were the same as those of the above-mentioned simulation. According to this test, cross-bowing C in a width direction of a steel strip which had previously been about 7 mm was decreased to about 0.5 mm. The vibration of the steel strip was substantially perfectly restrained. The distribution of coating weight in a width direction of the steel strip, which was previously about ± 50%, was improved to the range of ± 7%.

The method of the present invention can be applied to all sorts of process lines. The method of the present invention is very effective for damping of vibration of a steel strip in a gas jet cooling zone of a continuous annealing line, damping of vibration of a steel strip and prevention of bowing of a steel strip at positions of gas wiping in a hot-dipping plating apparatus and prevention of bowing of a steel strip in an electric galvanizing line.

**Table 1**

| B ( T ) | H ( A / M ) |
|---|---|
| 0 | 0 |
| 0.657 | 216 |
| 1.24 | 800 |
| 1.62 | 4000 |
| 1.74 | 8000 |
| 1.92 | 20000 |
| 1.983 | 30000 |
| 2.2 | 1000000 |

In the present invention, each of the high-frequency current conducting paths is arranged near one side of a steel strip moved continuously and near another side of the steel strip. Each of the high-frequency current conducting paths is arranged in parallel with the steel strip above the surface of molten metal in the coating bath. One high-frequency current conducting path near one side of the steel strip faces the other high-frequency current conducting path, the steel strip being positioned between the high-frequency current conducting paths. North Pole and South Pole of a magnet are arranged outside the edges of the steel strip adjacent to the high-frequency current conducting paths, substantially facing each other, a width direction of the steel strip being positioned between North Pole and South Pole of a magnet. The steel strip is magnetically saturated by the magnet. A high-frequency current of the same phase is flowed through the high-frequency current conducting paths and a high-frequency current of opposite phase is induced in the steel strip. A magnetic pressure acting on the surfaces of the steel strip is generated by interaction of this induced high-frequency current with the high-frequency current of the high-frequency current conducting paths. Bowing of the steel strip in the width direction of the steel strip and vibration of the steel strip are prevented by the magnetic pressure acting from both sides of the steel strip on the steel strip, and molten metal attaching to the steel strip is wiped out, whereby the coating weight on the steel strip is controlled.

Two pairs of high-frequency current conducting paths or more can be arranged at regular intervals in the direction of movement of a steel strip. Any magnet out of electromagnet and permanent magnet can be used. The magnets are arranged substantially facing each other, the steel strip being positioned between the magnets. The magnets can be arranged at two positions or more in the direction of movement of the steel strip.

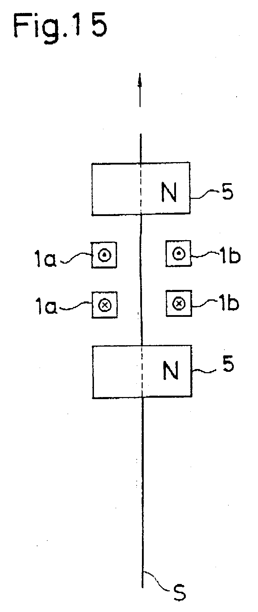

Figure 15 is a side elevation showing an example of an apparatus for executing the method of the present invention.

A steel strip S is continuously drawn out of a coating bath 4. Each of the high-frequency current conducting paths 1a, 1b are arranged in parallel with each of the sides of the steel strip S near the steel strip S and above the surface of molten metal in the coating bath. North Pole and South Pole of a magnet 3 are positioned near the high-frequency current conducting paths 1a, 1b, substantially facing each other outside both edges of the steel strip, a width direction of the steel strip being positioned between North Pole and South Pole of a magnet 3. Both the high-frequency current conducting paths 1a, 1b near both sides of the steel strip are arranged at an upper position and a lower position in the height direction. The magnets are arranged above and below the high-frequency current conducting paths 1a, 1b respectively.

When a high-frequency current of the same phase is flowed through the high-frequency current conducting paths 1a, 1b, an electric current of a phase opposite to the phase of the high-frequency current flows through the steel strip S. Symbol ⓞ of an upper high-frequency current conducting path 1a and symbol ⓞ of a high-frequency current conducting path 1b show that they have the same phase. Symbol ⃝ of a lower high-frequency current conducting path 1a and symbol ⃝ of a high-frequency current conducting path 1b show that they have the same phase. In this example, the phase of the upper high-frequency current conducting path 1a and the phase of the lower high-frequency current conducting path 1a are opposite to each other, but they can be equal to each other. Since an electric current flowing through the steel strip S flows in the direction opposite to a flow of electric current flowing throgh the high-frequency current conducting path, a magnetic repulsive force of the steel strip, namely a magnetic pressure of the steel strip acts on the surfaces of the steel strip. However, since a ferromagnetic body such as the steel strip has a high permeability, a magnetic attracting force exceeds a magnetic repulsive force when an electric current is simply flowed, whereby the steel strip comes to be in an unstable state. The magnets 3 arranged outside both edges of the steel strip magnetically saturate the steel strip to remove the above-mentioned unstable state. That is, the magnetic field in the steel strip comes to be present in a magnetically saturated area due to the work of the magnets 3. The range of variation of the magnetic field generated by the high-frequency current also comes to be present in the magnetically saturated area. The steel strip undergoes only a repulsive force from the high-frequency current conducting paths by magnetically saturating a ferromagnetic body and causing the ferromagnetic body to be paramagnetic. In consequence, the unstable state due to the magnetic attacting force can be removed. This repulsive force works like a non-contact spring. Vibration of the steel strip is restrained by the magnetic repulsive force and bowing of the steel strip is straightened. Under the condition that vibration of the steel strip is restrained by the magnetic repulsive force and bowing of the steel strip is straightened, an excess molten metal attaching to the steel strip is removed by the magnetic pressure acting on the steel strip from both sides of the steel strip, and the molten metal unifomly attaches to the surefaces of the steel strip.

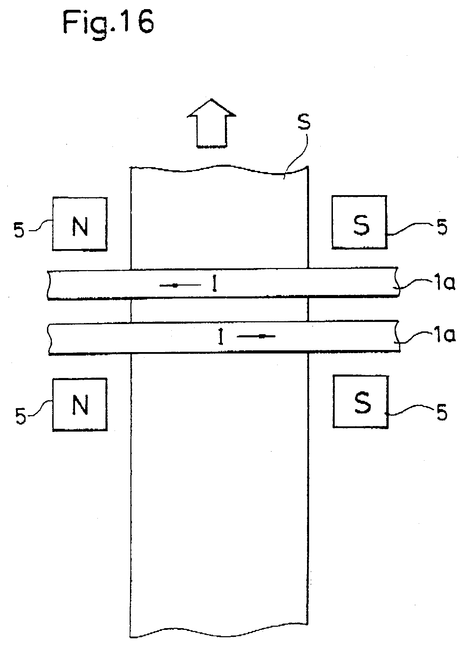

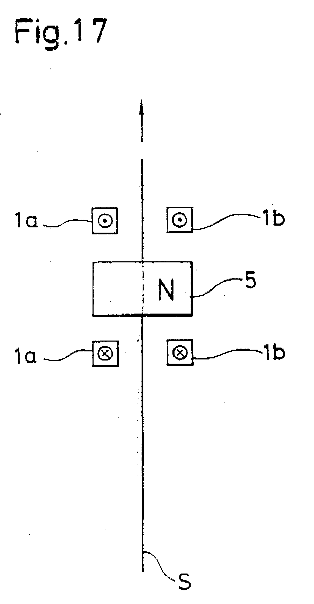

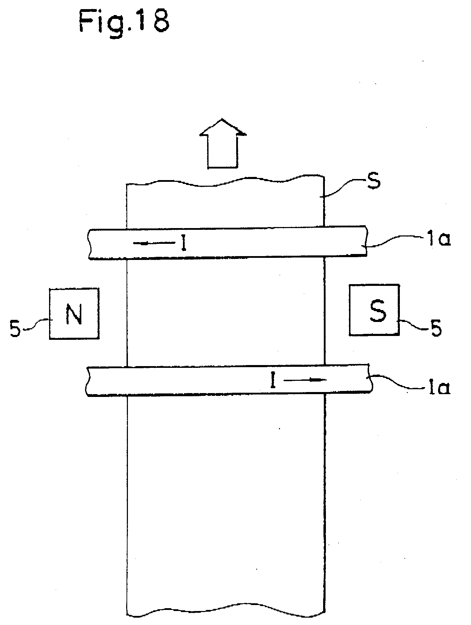

Figure 17 is a side elevation showing an example of an apparatus for executing the method of the present invention. Figure 18 is a front elevation showing the apparatus as shown in Figure 17. In the examples as shown in Figures 17 and 18, North Pole and South Pole of a magnet are positioned between two pairs of high-frequency current conducting paths, out of which one is positioned above and the other below. An electric current is flowed through the above two pairs of high-frequency current conducting paths as is in the examples of Figures 15 and 16.

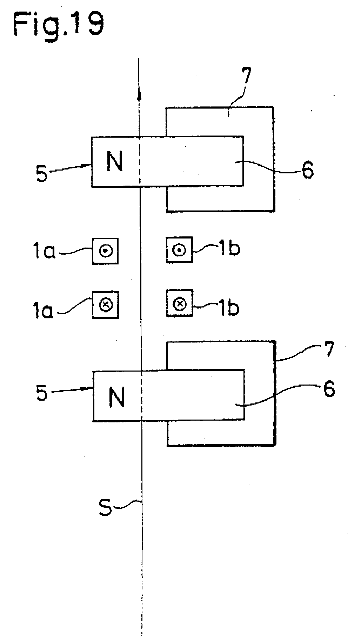

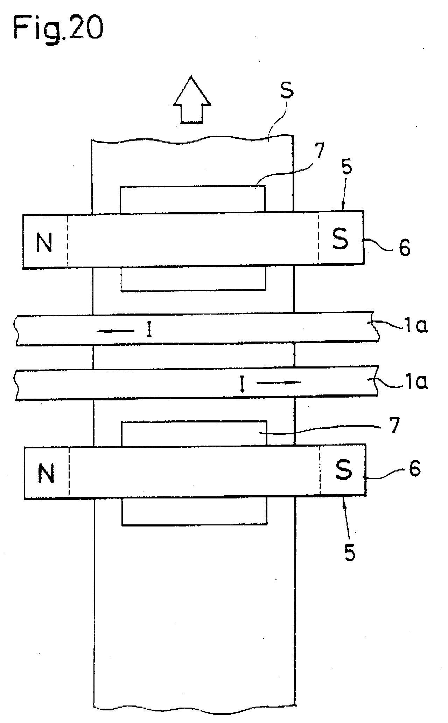

Figure 19 is a side elevation showing an example of an apparatus for executing the method of the present invention. Figure 20 is a front elevation showing the apparatus as shown in Figure 19. In the examples as shown in Figures 19 and 20, high-frequency current conducting paths and magnets are arranged in such a manner as shown in Figures 15 and 16, but a magnet 5 is composed of electromagnets. Each of the electromagnet is composed of a yoke 6 and a coil 7.

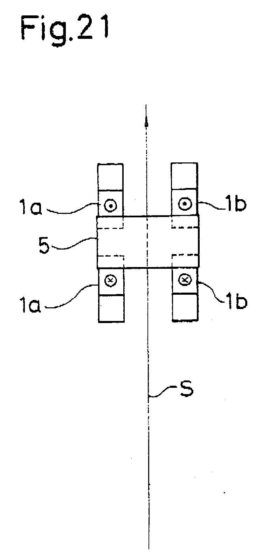

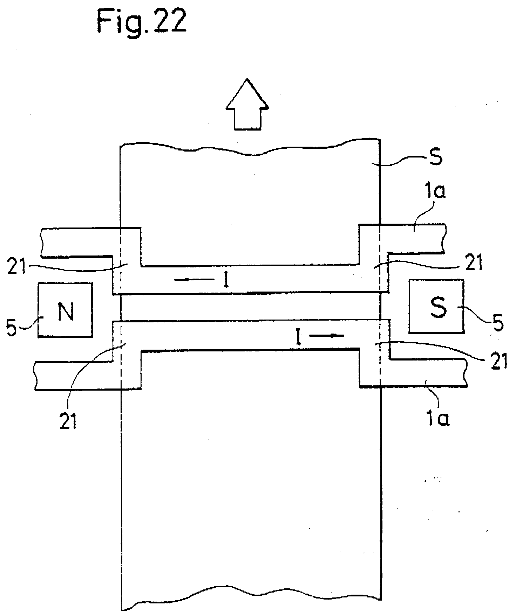

Figure 21 is a side elevation showing an example of an apparatus for executing the method of the present invention. Figure 22 is a front elevation of the apparatus as shown in Figure 21. Two pairs of high-frequency current conducting paths 1a, 1b, out of which one is positioned above and the other below, are arranged. The magnets 5 are positioned between the upper and lower high-frequency current conducting paths. To apply a particularly strong magnetic pressure to the edges of the steel strip, bends 21 are formed along the direction of movement of the steel strip at positions where the high-frequency current conducting paths 1a, 1b face the edges of the steel strip.

Since the direction of flow of electric current flowing through the steel strip near the edges of the steel strip forms an angle of 90 ° relative to the direction of electric current flowing through the high-frequency current conducting paths, the magnetic pressure inclines to weakening near the edges of the steel strip. To prevent the magnetic pressure from weakening, the high-frequency current conducting path is needed to incline relative to the entire length of the high-frequency current conducting path in the width direction of the steel strip as shown in Figures 9 and 10 or the high-frequency current conducting path can be inclined near the edges of the steel strip.

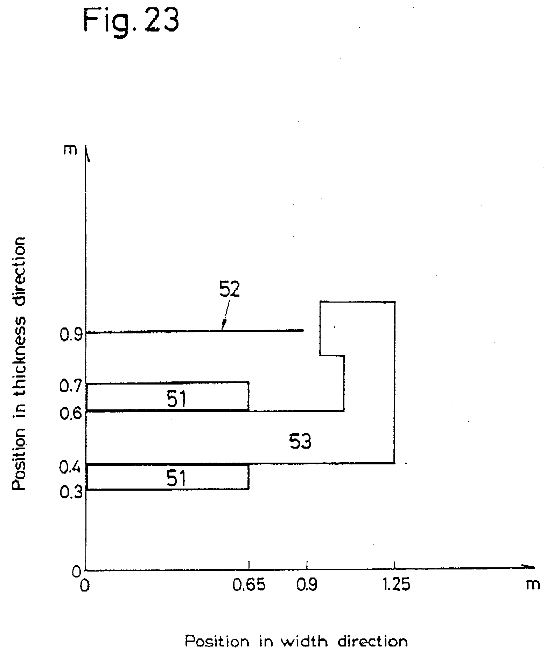

The present inventors carried out a simulation analysis of the magnetic pressure to calculate the magnetic pressure acting on the steel strip under the influence of the high-frequency curent flowed through the high-frequency current conducting path. Firstly, to confirm the fact that the steel strip was magnetically saturated by the electromagnet, a static magnetic field of the electromagnet and the steel strip in the structure of the apparatus as shown in Figures 19 and 20 was analyzed. Figure 23 is a graphical representation showing an analytic model. In the drawing, a relative position of a steel strip 52 and an iron core 53 are indicated. The analytic condition is as follows:

| | |
|---|---|
| Non-permeability of iron core: | 1000 |
| Electric current in coil: | 2.6 x 10⁵ A |
| Size of steel strip: | width 1800 mm |
| | thickness 2.3 mm |

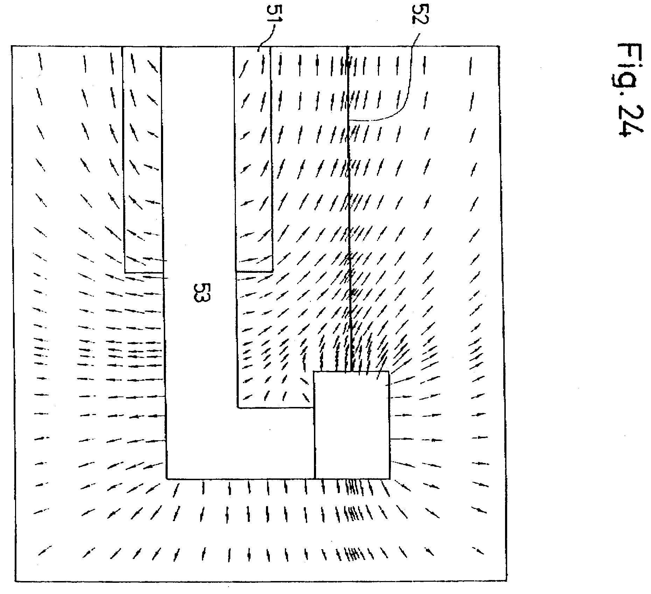

A distribution of magnetic fields obtained by the analysis is shown in Figure 24. A magnetic field intensity in the ferromagnetic body indicated 6 x 10⁵ A/m or more. This showed that the steel strip was sufficiently magnetically saturated, that is, the steel strip fell in the saturation area.

An apparatus corresponding to Figures 19 and 20 was arranged at intervals of about 2 m in three electric galvanizing lines and tested on the basis of those results. The size and the condition of electric current were the same as those of the above-mentioned simulation.

According to this test, cross-bowing in a width direction of a steel strip which had previously been about 7 mm was decreased to about 0.5 mm. The vibration of the steel strip also was substantially perfectly restrained. The distribution of coating weights in a width direction of the steel strip, which was previously about ± 50%, was improved to the range of ± 7% or less.

The method of the present invention can be applied to all sorts of process lines. The method of the present invention is very effective for damping of vibration of a steel strip in a gas jet cooling zone of a continuous annealing line, damping of vibration of a steel strip and prevention of bowing of a steel strip at positions of gas wiping in a hot-dipping plating apparatus and prevention of bowing of a steel strip in an electric galvanizing line.

Reference signs in the claims are intended for better understanding and shall not limit the scope.

## Claims

1. A method for continuously moving a steel strip, comprising the steps of:
positioning at least one pair of high-frequency current conducting paths ( 1a, 1b ) near one side of a steel strip (S) moved continuously and near another side thereof, each of said high-frequency current conducting paths being parallel with a surface of the steel strip; and
flowing a high-frequency current strong enough to magnetically saturate the steel strip through said at least one pair of high-frequency current conducting paths to induce a high-frequency current of an opposite phase in the steel strip, a magnetic pressure acting on surfaces of the steel strip being generated by interaction of this induced high-frequency current with the high-frequency current of the high-frequency current conducting paths.

2. The method of claim 1, characterized in that
said positioning at least one pair of high-frequency current conducting paths includes positioning at least one pair of high-frequency current conducting paths so that the pair of high-frequency current conducting paths can face each other via a steel strip; and
said flowing a high-frequency current includes flowing a high-frequency current of the same phase through at least one pair of high-frequency current conducting paths.

3. The method of claim 1, characterized in that said positioning at least one pair of high-frequency current conducting paths includes positioning at least two pairs of high-frequency current conducting paths so that each of the high-frequency current conducting paths can be positioned, being shifted above and below relative to a steel strip.

4. The method of claim 1, characterized in that said high-frequency current conducting path excluding its side facing a steel strip is enclosed by an electromagnetic material (2).

5. The method of claim 1, characterized in that said high-frequency current conducting path has a bend (11) along a direction of movement of a steel strip at a portion where the high-frequency current conducting path faces an edge of the steel strip.

6. The method of claim 1, characterized in that said high-frequency current conducting path in its entire length is inclined in a width direction of a steel strip.

7. The method of claim 1, characterized in that a portion of said high-frequency current conducting path where the high-frequency current conducting path faces an edge of s steel strip is inclined in a width direciton of the steel strip.

8. The method of claim 2, characterized by further comprising the step of placing North Pole and South Pole of at least one magnet (5) so that North Pole and South Pole of the magnet can face each other, a width direction of a steel strip being positioned between North Pole and South Pole of the magnet outside both edges of the steel strip near at least a pair of high-frequency current conducting paths, and the steel strip being magnetically saturated by said magnet.

9. The method of claim 8, characterized in that
said high-frequency current conducting paths are two pairs of high-frequency current conducting paths positioned in a direction of height, one pair of the high-frequency current conducting paths being upper high-frequency current conducting paths and the other being lower high-frequency current conducting paths; and
said magnets are two magnets, one magnet being positioned near an upper portion of the upper high-frequency current conducting paths and the other magnets being positioned near a lower portion of the lower high-frequency current conducting paths.

10. The method of claim 8, characterized in that
said high-frequency current conducting paths are two pairs of high-frequency current conducting paths positioned in a direction of height, one pair of the high-frequency current conducting paths being upper high-frequency current conducting paths and the other being lower high-frequency current conducting paths; and
said magnet is a magnet, being positioned between the upper high-frequency current conducting path and the lower high-frequency current conducting path in a direction of height.

11. The method of claim 8, characterized in that said magnet is an electromagnet.

12. The method of claim 8, characterized in that said magnet is a permanent magnet.

13. A method for continuously moving a steel strip, comprising the steps of:
positioning high-frequency current conducting paths ( 1a, 1b ) near one side of a steel strip (S) moved continuously and near another side thereof, each of said high-frequency current conducting paths being parallel with a surface of the steel strip and a high-frequency current conducting path near one side of the steel strip facing a high-frequency current conducting path near another side of the steel strip via the steel strip;
placing North Pole and South Pole of a magnet (5) outside both edges of a steel strip near the high-frequency current conducting paths so that North Pole and South Pole of the magnet can face each other, a width direction of the steel strip being positioned between North Pole and South Pole of the magnet; and
flowing a high-frequency current of the same phase through said high-frequency current conducting paths to induce a high-frequency current of opposite phase in the steel strip, a magnetic pressure acting on surfaces of the steel strip being generated by interaction of this induced high-frequency current with said high-frequency current of said high-frequency current conducting paths.
